# DEMANDE DE BREVET EUROPEEN

(11) **EP 4 465 402 A1**
(43) Date de publication de la demande: **20.11.2024**
(21) Numéro de dépôt: 24176457.0
(22) Date de dépôt: 16.05.2024
(51) Int. Cl.: H01M 10/0525, H01M 10/0565

(54) **PRÉPARATION D'UN ÉLECTROLYTE POLYMÈRE RÉTICULÉ ET PLASTIFIÉ**

(30) Priorité: 17.05.2023 FR 2304930
(71) Demandeur: Commissariat à l'Energie Atomique et aux Energies Alternatives, 75015 Paris (FR)
(72) Inventeur: BRUNO, Laura, 38054 GRENOBLE CEDEX 09 (FR); PICARD, Lionel, 38054 GRENOBLE CEDEX 09 (FR)
(74) Mandataire: Cabinet Nony

(57) **Abrégé**

L'invention concerne un procédé de préparation d'un électrolyte dit quasi-solide comprenant au moins les étapes suivantes :
(i) disposer d'une composition comprenant au moins un agent plastifiant ; au moins un polyalkylène carbonate présentant deux fonctions hydroxyle terminales libres et présentant une masse molaire moyenne Mw, inférieure ou égale à 200 000 g.mol⁻¹ ; au moins un composé triisocyanate dans un rapport massique polycarbonate(s) dihydroxylé(s)/triisocyanate(s) compris entre 0,5 et 5 ; au moins un sel de métal alcalin ou alcalino-terreux ; au moins un catalyseur de la réaction de couplage entre une fonction hydroxyle et une fonction isocyanate ; et éventuellement au moins une charge inorganique ; et
(ii) procéder à la réticulation de ladite composition, pour former ledit électrolyte quasi-solide.

Elle concerne encore l'électrolyte quasi-solide ainsi obtenu, et son utilisation dans un système électrochimique, en particulier dans une batterie au lithium.

## Description

### Domaine technique

La présente invention se rapporte à la préparation d'un nouvel électrolyte polymère dit quasi-solide, ainsi qu'à l'électrolyte polymère quasi-solide ainsi obtenu.

De tels électrolytes peuvent être utilisés dans différents systèmes ou dispositifs électrochimiques, notamment dans des batteries rechargeables au lithium.

### Technique antérieure

D'une manière classique, le principe de fonctionnement d'un générateur électrochimique repose sur l'insertion et le retrait, aussi appelé « désinsertion », d'un ion de métal alcalin ou d'un proton, dans et depuis l'électrode positive, et le dépôt ou l'extraction de cet ion, sur et de l'électrode négative.

Les principaux systèmes utilisent le cation lithium comme espèce ionique de transport. Dans le cas d'un accumulateur au lithium par exemple, le cation lithium extrait de l'électrode positive lors de la charge de la batterie vient se déposer sur l'électrode négative, et inversement, il s'extrait de l'électrode négative pour s'intercaler dans l'électrode positive lors de la décharge.

Le transport du proton ou du cation alcalin ou alcalino-terreux, en particulier du cation lithium, entre l'électrode positive et l'électrode négative, est assuré par un électrolyte conducteur ionique.

La formulation de l'électrolyte utilisé revêt un caractère essentiel pour les performances du système électrochimique, en particulier lorsque celui-ci est utilisé à des températures très basses ou très élevées. La conductivité ionique de l'électrolyte conditionne notamment l'efficacité du système électrochimique étant donné qu'elle intervient sur la mobilité des ions entre les électrodes positive et négative. D'autres paramètres interviennent également dans le choix de l'électrolyte mis en oeuvre. Il s'agit notamment de sa stabilité thermique, chimique ou électrochimique au sein du système électrochimique, ainsi que des critères économiques, de sécurité et de respect de l'environnement, incluant notamment la toxicité de l'électrolyte.

Les batteries au lithium, mettant en oeuvre des électrolytes à l'état solide (dits encore « SSE » pour l'acronyme anglo-saxon « Solid-State Electrolyte »), sont considérées comme la prochaine génération des dispositifs de stockage d'énergie. Ces électrolytes, sans solvant, permettent notamment d'atteindre des densités d'énergie plus élevées.

Les SSEs peuvent être classés en trois catégories : les électrolytes solides inorganiques (dits encore « ISEs » pour « Inorganic Solid Electrolytes »), les électrolytes solides polymériques (dits encore « SPEs » pour « Solid Polymer Electrolytes ») et les électrolytes solides hybrides (dits encore « HSEs » pour « Hybrid Solid Electrolytes »). Une attention particulière est portée aux SPEs et aux HSEs en raison de la flexibilité élevée de ces électrolytes, qui autorise leur mise en oeuvre pour l'élaboration de batteries d'épaisseur réduite et présentant une plus grande flexibilité.

Les SPEs et HSEs les plus répandus, notamment pour des dispositifs électrochimiques au lithium, sont à base de polyéthers, et plus particulièrement de poly(oxyéthylène) (POE) et leurs dérivés, en raison de leur faible température de transition vitreuse (Tg), de l'ordre de - 60°C, comparativement à celle d'autres polymères, et de leur aptitude à complexer les cations Li⁺. Toutefois, la structure de coordination du POE étant très stable, les ions Li⁺ sont moins mobiles et, par conséquent, les électrolytes à base de POE présentent des performances limitées en matière de nombre de transport des ions (t+) et de conductivité ionique. Ainsi, pour un électrolyte solide polymérique à base de POE, par exemple, le nombre de transport ionique t+ oscille généralement entre 0,1 et 0,2, sachant que l'on recherche à se rapprocher le plus d'un nombre de transport ionique de 1 pour obtenir un système au sein duquel les ions circulent parfaitement. Par ailleurs, le POE est cristallin dans une large gamme de températures (la cristallinité du POE pur est de l'ordre de 75-80 % à température ambiante), ce qui conduit à une perte de conductivité ionique de l'électrolyte solide à base de POE en dessous de sa température de fusion (environ 60-65°C). La plupart des SPE à base de POE sont également associés à des diagrammes de phase complexes, avec plusieurs phases présentes dans de larges intervalles de température, ce qui rend le comportement de conductivité imprévisible. La stabilité mécanique du POE est également insuffisante aux températures élevées (supérieures à 60 °C) où il conduit bien les ions. Qui plus est, le POE présente une faible fenêtre de stabilité électrochimique (< 3,9 V vs. Li/Li⁺), ce qui rend ce type de SPEs adapté uniquement pour leur mise en oeuvre avec des cathodes à bas potentiel, comme par exemple de type LiFePO₄ (LFP).

Pour ces raisons, de nombreux polymères alternatifs ont été développés ces dernières années, comme par exemple des polycarbonates, des polyesters, des poly(arylène éther sulfone)s, des polynitriles, des polyalcools et des polyamines, etc.

Parmi eux, le poly(triméthylène carbonate) (PTMC) est apparu comme un matériau alternatif au POE, particulièrement intéressant pour former des électrolytes polymériques solides, permettant d'accéder à une large fenêtre de stabilité électrochimique (jusqu'à 4,5 V vs. Li/Li⁺), une bonne stabilité thermique et un nombre de transport ionique (t+ de 0,75) plus élevé que le POE. Ces propriétés particulièrement avantageuses sont obtenues grâce à une structure amorphe, des segments de chaîne flexibles et une constante diélectrique élevée, et font du PTMC un matériau polymérique particulièrement prometteur pour former la nouvelle génération des électrolytes polymériques solides.

Malheureusement, d'une manière générale, les polyalkylène carbonates, en particulier le PTMC, présentent une tenue mécanique relativement faible, ce qui peut entrainer, entre autres, des problèmes de fluage à hautes températures.

### Résumé de l'invention

La présente invention vise à remédier au problème de faible tenue mécanique des électrolytes à base de PTMC, en proposant un nouveau matériau à base notamment de polyalkylène carbonate, en particulier à base de PTMC, alliant d'excellentes propriétés électrochimiques et de tenue mécanique.

Plus particulièrement, la présente invention concerne un procédé de préparation d'un électrolyte dit quasi-solide comprenant au moins les étapes suivantes :
(i) disposer d'une composition comprenant :
   a) au moins un agent plastifiant choisi parmi les carbonates linéaires ou cycliques ; les sulfones linéaires ou cycliques ; les carbonates fluorés ; les dinitriles ; les lactones ; les polyéthers linéaires ou cycliques liquides ; les polyéthers fluorés ; et leurs mélanges ;
   b) au moins un polyalkylène carbonate présentant deux fonctions hydroxyle terminales libres (-OH), dit polycarbonate dihydroxylé, et présentant une masse molaire moyenne Mw, inférieure ou égale à 200 000 g.mol⁻¹ ;
   c) au moins un composé triisocyanate ; le ou lesdits polycarbonate(s) dihydroxylé(s) et le ou lesdits composés triisocyanate(s) étant mis en oeuvre dans un rapport massique polycarbonate(s) dihydroxylé(s)/triisocyanate(s) compris entre 0,5 et 5 ;
   d) au moins un sel de métal alcalin ou alcalino-terreux, dit sel conducteur ionique, en particulier un sel de lithium ;
   e) au moins un catalyseur de la réaction de couplage entre une fonction hydroxyle et une fonction isocyanate ; et
   f) éventuellement au moins une charge inorganique, en particulier conductrice du ou des cations alcalin ou alcalino-terreux, plus particulièrement une charge inorganique conductrice des ions lithium ;
(ii) procéder à la réticulation de ladite composition, pour former ledit électrolyte quasi-solide.

Selon une variante de réalisation, ladite composition de l'étape (i) peut être éventuellement, préalablement à l'étape (ii), mise en oeuvre sous la forme d'une couche en surface d'un substrat, afin de former un film d'électrolyte quasi-solide.

Comme il est détaillé ci-après, l'étape (ii) permet avantageusement de former un réseau polymérique réticulé dans lequel ledit agent plastifiant, dit plastifiant, est piégé.

C'est précisément au regard de la présence du plastifiant liquide piégé dans le réseau polymérique réticulé que l'électrolyte est dit quasi-solide.

Ainsi au sens de l'invention, par « électrolyte quasi-solide », on entend un électrolyte comportant au moins un composant sous forme liquide et une structure solide. Avantageusement, l'électrolyte quasi-solide obtenu selon le procédé de l'invention comprend le ou lesdit(s) plastifiant(s) à titre de composant sous forme liquide et un réseau polymérique réticulé à titre de structure solide.

Certes, la formation d'électrolytes solides à base d'un réseau polymérique réticulé a déjà été proposée notamment dans les documents FR 2 781 932, FR 3 098 349 et Lin et al. (Journal of Energy Chemistry 52 (2021) 67-74).

Ainsi, FR 2 781 932 décrit des électrolytes polymère solide comprenant au moins un polymère de méthacrylonitrile rendu tridimensionnel par réticulation. FR 3 098 349 propose pour sa part la formation d'un film d'électrolyte polymérique solide à base d'une matrice réticulée à base de copolymères formés à partir de monomères cycliques de type lactone et carbonate cyclique, en présence d'une molécule organique réticulante thermoréactive ou photoréactive. Quant à la publication Lin *et al.*, il y est proposé des électrolytes à base de copolymères blocs avec des réseaux tridimensionnels formés par copolymérisation réticulée à partir du polyéthylène glycol ayant des segments de chaînes souples et des segments durs de trimères d'hexaméthylène diisocyanate. L'électrolyte à base d'un réseau polymérique présente une structure ayant une résistance mécanique favorable à 55 °C. Toutefois, aucun de ces électrolytes n'est obtenu par formation d'un réseau polymérique réticulé à partir d'un polycarbonate dihydroxylé et d'un composé triisocyanate, et encore moins en présence d'agent plastifiant comme requis selon l'invention.

De préférence, l'électrolyte quasi-solide préparé par le procédé selon l'invention est obtenu à partir d'un polytriméthylène carbonate, noté PTMC, porteur de deux fonctions terminales hydroxy, dit également PTMC dihydroxylé, et du poly(hexaméthylène diisocyanate), noté PHDI.

Selon un mode de réalisation particulier, les composants b), c), d), e) et éventuellement f) de la composition de l'étape (i) sont formulés dans le ou lesdits plastifiant(s). Le plastifiant mis en oeuvre dans la composition de l'étape (i) joue de préférence le rôle de solvant.

En particulier, le procédé selon l'invention ne met pas en oeuvre de solvant annexe distinct du ou desdits plastifiant(s).

En particulier, le procédé selon l'invention est dénué d'une étape d'évaporation.

L'invention concerne encore un électrolyte quasi-solide, notamment sous la forme d'un film d'électrolyte quasi-solide, obtenu par le procédé selon l'invention.

Selon une variante de réalisation, un électrolyte quasi-solide selon l'invention est constitué d'un composant sous forme liquide et d'une structure solide.

En particulier, l'électrolyte quasi-solide peut comporter un ou plusieurs plastifiant(s), tels que définis précédemment, piégé(s) dans le réseau polymérique réticulé.

En particulier, le film d'électrolyte quasi-solide comprend de 1% à 85% massique d'agents plastifiants choisi(s) parmi le carbonate d'éthylène, le carbonate de propylène, le carbonate de diéthyle, le sulfolane, et leurs mélanges, plus particulièrement de 10% à 80% massique, notamment de 40% à 70% massique, par rapport à la masse totale dudit électrolyte quasi-solide.

En particulier, le réseau polymérique réticulé dudit électrolyte quasi-solide selon l'invention représente de 15 % à 99 % massique, en particulier de 30 % à 70 % massique, de la masse totale dudit électrolyte quasi-solide.

L'électrolyte quasi-solide obtenu selon l'invention s'avère avantageux à plusieurs titres.

Tout d'abord, la réticulation d'au moins un polyalkylène carbonate selon l'invention, notamment d'un polytriméthylène carbonate dihydroxylé, par un composé triisocyanate selon l'invention permet d'accéder à un électrolyte à base d'une matrice réticulée, dite encore réseau polymérique réticulé, au sein de laquelle les chaînes polytriméthylène carbonate sont réticulées par l'intermédiaire de groupements uréthane, dits « noeuds de réticulation ». Cette matrice, figée par réticulation, formant la structure solide de l'électrolyte permet avantageusement de s'affranchir des problèmes de fluage à hautes températures rencontrés avec des électrolytes à base de PTMC tout en présentant une bonne flexibilité. Le défaut associé, à savoir une baisse de la conductivité ionique par rapport à un polycarbonate non réticulé, d'autant plus importante que la masse molaire du polycarbonate dihydroxylé est élevée, est avantageusement surmonté au moins partiellement, voire totalement, par la présence du plastifiant requis selon l'invention et ce même pour des masses molaires aussi élevées que 100 kg/mol.

Ainsi, l'électrolyte quasi-solide selon l'invention permet d'atteindre un excellent compromis entre la conductivité ionique et la tenue mécanique, notamment à température ambiante, pour une large gamme de masses molaires du polycarbonate dihydroxylé.

Par ailleurs, l'électrolyte quasi-solide obtenu selon l'invention présente de bonnes performances en termes de conductivité ionique. Ainsi, il peut avantageusement présenter une conductivité ionique, mesurée à 60 °C, supérieure ou égale à 10⁻⁷ S.cm⁻¹, en particulier supérieure ou égale à 10⁻⁶ S.cm⁻¹, voire supérieure ou égale à 5.10⁻⁶ S.cm⁻¹. Il peut en outre présenter une conductivité ionique supérieure à la conductivité ionique d'un électrolyte polymérique solide non réticulé à base de PTMC pour des températures inférieures à 50°C. Ainsi, sa conductivité ionique, mesurée à 20 °C, peut être supérieure ou égale à 10⁻⁹ S.cm⁻¹, en particulier supérieure ou égale à 10⁻⁸ S.cm⁻¹, voire supérieure ou égale à 10⁻⁷ S.cm⁻¹.

Enfin, le plastifiant étant piégé dans la matrice polymère, l'électrolyte quasi-solide obtenu selon l'invention présente une stabilité supérieure à celle des électrolytes quasi-solides usuels (qui assure la sécurité des dispositifs de stockage d'énergie les comprenant).

Un système électrochimique, en particulier une batterie au lithium, comprenant un électrolyte quasi-solide selon l'invention, peut également fonctionner sur une large plage de températures, de préférence entre -20°C et 90°C, en particulier entre -10°C et 80°C.

L'électrolyte quasi-solide selon l'invention peut être mis en oeuvre dans de nombreux systèmes électrochimiques, tels que les générateurs, en particulier des batteries au lithium. L'invention concerne ainsi, selon un autre de ses aspects, l'utilisation d'un électrolyte quasi-solide selon l'invention dans un système électrochimique, en particulier dans une batterie rechargeable, notamment une batterie au lithium, par exemple une batterie lithium-ion ou lithium-métal.

L'invention concerne notamment un élément électrochimique comprenant un électrolyte quasi-solide selon l'invention, ledit élément électrochimique comportant plus particulièrement un film d'électrolyte quasi-solide pris en sandwich entre au moins une électrode positive et une électrode négative.

Elle concerne encore un module de batterie comprenant une pluralité d'éléments électrochimiques selon l'invention ; ainsi qu'une batterie, notamment une batterie rechargeable, en particulier une batterie au lithium, notamment une batterie lithium-ion ou lithium-métal, comportant un assemblage de modules de batterie selon l'invention.

D'autres caractéristiques, variantes et avantages des électrolytes quasi-solides selon l'invention, et de leur préparation, ressortiront mieux à la lecture de la description, des exemples et figures qui vont suivre, donnés à titre illustratif et non limitatif de l'invention.

### Brève description des dessins

[Fig 1] présente, de manière schématique, un exemple de procédé de préparation d'un électrolyte quasi-solide selon l'invention, avec (a) la solubilisation d'un PTMC dihydroxylé dans une solution de LiTFSI dans du carbonate d'éthylène (EC), (b) l'ajout de poly(hexaméthylène diisocyanate), et (c) la réaction de réticulation entre un PTMC dihydroxylé et le poly(hexaméthylène diisocyanate) ;
[Fig 2] présente le spectre infrarouge d'un électrolyte polymérique quasi-solide selon l'invention préparé en exemple 1 ;
[Fig 3] présente, de manière schématique, la structure des piles boutons mises en oeuvre pour les essais de conductivité selon l'exemple 2 ;

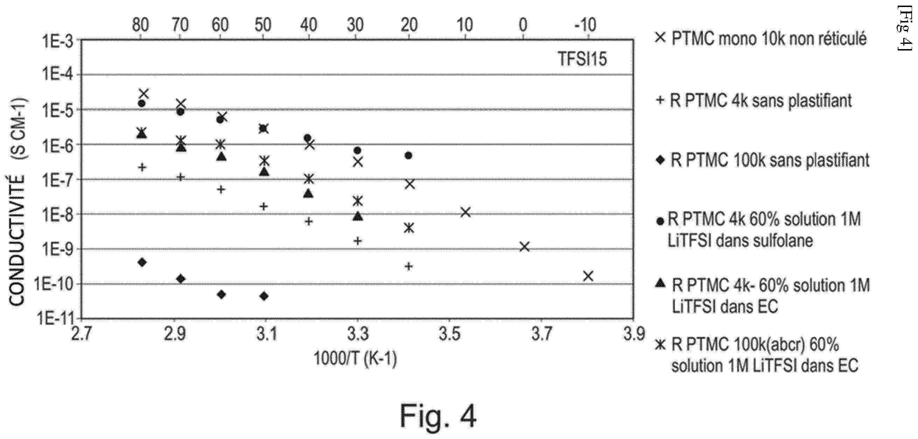

[Fig 4] présente l'évolution de la conductivité ionique (en S.cm⁻¹) en fonction de la température (1000/T, T étant exprimée en degré Kelvin), pour un électrolyte solide réticulé préparé en exemple 1 à partir d'un PTMC dihydroxylé de 4 kg.mol⁻¹ sans plastifiant (hors invention, nommé « R PTMC 4k sans plastifiant »), pour un électrolyte quasi-solide réticulé préparé en exemple 1 à partir d'un PTMC dihydroxylé de 4 kg.mol⁻¹ avec du sulfolane (selon l'invention, nommé « R PTMC 4k 60% solution 1M LiTFSI dans sulfolane »), ou avec du carbonate d'éthylène (selon l'invention, nommé « R PTMC 4k 60% solution 1M LiTFSI dans EC ») ; pour un électrolyte solide réticulé préparé en exemple 1 à partir d'un PTMC dihydroxylé de 100 kg.mol⁻¹ sans plastifiant (hors invention, nommé « R PTMC 100k sans plastifiant ») et pour un électrolyte quasi-solide réticulé préparé en exemple 1 à partir d'un PTMC dihydroxylé de 100 kg.mol⁻¹ avec du carbonate d'éthylène (selon l'invention, « nommé R PTMC 100k(abcr) 60% solution 1M LiTFSI dans EC ») ; et pour un électrolyte polymère non réticulé préparé à partir d'un PTMC monohydroxylé de 10 kg.mol⁻¹ (hors invention, nommé « PTMC mono 10k non réticulé »).

Dans la suite du texte, les expressions « compris entre ... et ... » et « allant de ... à ... » et « variant de ... à ... » sont équivalentes et entendent signifier que les bornes sont incluses, sauf mention contraire.

### Description détaillée

Comme indiqué précédemment, l'électrolyte quasi-solide est obtenu à partir de la réticulation d'au moins un polyalkylène carbonate présentant deux fonctions hydroxyle terminales libres avec au moins un composé triisocyanate, en présence d'au moins un agent plastifiant.

### Agent plastifiant

L'invention met en oeuvre au moins un agent plastifiant choisi parmi les carbonates linéaires ou cycliques tels que le carbonate d'éthylène, le carbonate de propylène, le carbonate de diéthyle ou le diméthylcarbonate ; les sulfones linéaires ou cycliques telles que le sulfolane; les carbonates fluorés tels que le fluoroéthylène carbonate ; les dinitriles tels que le succinonitrile ; les lactones telles que la γ-butyrolactone ; les polyéthers linéaires ou cycliques liquides ; les polyéthers fluorés ; et leurs mélanges.

En particulier, le ou lesdits agent(s) plastifiant(s) sont choisis parmi le carbonate d'éthylène, le carbonate de propylène, le carbonate de diéthyle et le sulfolane, de préférence parmi le carbonate d'éthylène et le sulfolane.

De préférence, l'agent plastifiant peut solubiliser le polyalkylène glycol, le composé triisocyanate et le sel de métal alcalin ou alcalino-terreux. Avantageusement, l'agent plastifiant permet à la fois de solubiliser les polymères précurseurs du réseau polymérique réticulé, et de conduire les ions après formation du réseau polymérique réticulé.

En particulier, l'agent plastifiant peut présenter une température d'ébullition d'au moins 100°C, plus particulièrement d'au moins 150°C, voire d'au moins 200°C.

### Polyalkylène carbonate

L'invention met en oeuvre au moins un polyalkylène carbonate, encore appelé poly(carbonate d'alkylène), présentant deux fonctions terminales hydroxyles libres (-OH). Autrement dit, le polyalkylène carbonate mis en oeuvre selon l'invention présente la structure suivante :

[Chem 1] HO-PC-OH,

dans laquelle PC est une chaîne polyalkylkène carbonate, en particulier obtenue, comme décrit dans la suite du texte, par polymérisation par ouverture de cycle d'au moins un monomère carbonate cyclique.

Par « polyalkylène carbonate », on entend désigner aussi bien des homopolymères comprenant un seul type d'unités alkylène carbonate que des copolymères comprenant au moins deux unités différentes alkylène carbonate.

De préférence, le polyalkylène carbonate est un homopolymère formé d'unités alkylène carbonate identiques.

Un polyalkylène carbonate, au sens de l'invention, ne met en oeuvre aucune unité polymérique autre que des unités alkylène carbonate. En particulier, il ne comporte aucune unité dérivée de monomères de type lactone ou de type méthacrylonitrile.

On désigne plus simplement sous l'appellation « polyalkylène carbonate dihydroxylé » ou « polycarbonate dihydroxylé », un polyalkylène carbonate mis en oeuvre selon l'invention, tel que défini précédemment.

Comme indiqué précédemment, le polycarbonate dihydroxylé mis en oeuvre selon l'invention présente une masse molaire moyenne, notée Mw, inférieure ou égale à 200 000 g.mol⁻¹.

Selon un mode de réalisation préféré, le polycarbonate dihydroxylé mis en oeuvre selon l'invention présente une masse molaire moyenne, notée Mw, comprise entre 2 000 et 100 000 g.mol⁻¹, de préférence inférieure ou égale à 10 000 g.mol⁻¹, notamment comprise entre 4 000 et 10 000 g.mol⁻¹.

Selon un autre mode de réalisation particulier, le polycarbonate dihydroxylé mis en oeuvre selon l'invention peut présenter une masse molaire moyenne, notée Mw, comprise entre 4 000 et 150 000 g.mol⁻¹, de préférence supérieure ou égale à 10 000 g.mol⁻¹, notamment comprise entre 10 000 et 150 000 g.mol⁻¹, voire entre 50 000 et 120 000 g.mol⁻¹.

La masse molaire moyenne, notée Mw, peut être mesurée par chromatographie d'exclusion stérique (SEC). Elle peut encore être obtenue à partir de l'analyse RMN ¹H du polyalkylène carbonate obtenu.

Sans vouloir être lié par la théorie, la masse molaire moyenne du polycarbonate dihydroxylé conditionne, à l'issue de la formation du réseau réticulé en étape (ii) du procédé de l'invention, la distance inter-noeuds entre les noeuds de réticulation établis à partir du composé triisocyanate. De préférence, la longueur des chaînes polyalkylène carbonate doit permettre d'assurer à la fois une bonne souplesse des chaînes, une conductivité ionique satisfaisante et de bonnes propriétés mécaniques.

De préférence, le polycarbonate dihydroxylé mis en oeuvre dans le procédé de l'invention présente un indice de polydispersité, traduisant la bonne homogénéité des longueurs de chaîne du polycarbonate, inférieur ou égal à 2, en particulier inférieur ou égal à 1,5. L'indice de polydispersité, noté PDI, est égal au rapport de la masse molaire moyenne en poids Mw sur la masse molaire moyenne en nombre Mn. La masse molaire moyenne en nombre peut être déterminée par chromatographie d'exclusion stérique, éventuellement couplée avec la diffusion de lumière statique.

De préférence, le polycarbonate dihydroxylé est obtenu, préalablement à sa mise en oeuvre dans le procédé de l'invention, par polymérisation par ouverture de cycle (dite encore « ROP » pour « Ring-Opening Polymerization » en terminologie anglosaxonne) d'un ou plusieurs monomères carbonates cycliques, en particulier comportant de cinq à huit chaînons.

Les monomères carbonates cycliques peuvent être plus particulièrement de formule (I) suivante : 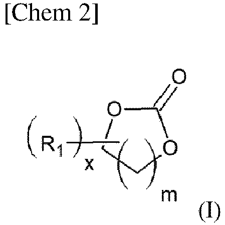 dans laquelle :
m est un entier compris entre 1 et 4, notamment entre 1 et 3, en particulier m vaut 1 ou 2 et plus particulièrement m vaut 2 ;
x est un entier compris entre 0 et 2m+2 ; et
R₁, porté(s) par un ou plusieurs atomes de carbone du cycle, représentent, indépendamment les uns des autres, des substituants, en particulier des groupements alkyles, en particulier en C₁ à C₅, linéaires ou ramifiés.

Selon un mode de réalisation particulier, le monomère carbonate cyclique est choisi parmi le triméthylène carbonate et ses dérivés. En particulier, le monomère carbonate cyclique est le triméthylène carbonate.

Selon un mode de réalisation particulièrement préféré, le polycarbonate dihydroxylé mis en oeuvre selon l'invention est un poly(triméthylène carbonate) dihydroxylé (PTMC dihydroxylé), en particulier obtenu par ROP du triméthylène carbonate (TMC).

La réaction de ROP pour la synthèse d'un polycarbonate selon l'invention peut être plus particulièrement conduite en présence d'au moins une molécule organique, dite « initiateur » ou « amorceur », portant deux fonctions hydroxyles (composé diol) et, éventuellement, en présence d'au moins un catalyseur de la réaction de polymérisation.

Ledit initiateur ou amorceur de la ROP peut présenter une masse molaire moyenne en nombre allant de 18 à 50 000 g.mol⁻¹, en particulier de 60 à 10 000 g.mol⁻¹.

En particulier, l'initiateur peut être un composé de formule Rᵢ(-OH)₂, dans laquelle Rᵢ représente un groupe non réactif divalent, en particulier un groupe alkylène, notamment en C₁ à C₆, en particulier en C₁ à C₃, linéaire ou ramifié.

De préférence, l'initiateur pour la synthèse d'un polycarbonate dihydroxylé selon l'invention est l'éthylène glycol.

Il appartient à l'homme du métier d'ajuster les conditions de polymérisation pour accéder au polycarbonate dihydroxylé souhaité.

La mise en oeuvre dudit initiateur diol de la ROP, en particulier apporté en une quantité déterminée, permet avantageusement de contrôler la masse molaire et la polydispersité des polycarbonates synthétisés. Selon un mode de réalisation particulier, le ou lesdits monomères carbonate cyclique et le ou lesdits initiateurs diols sont mis en oeuvre dans un rapport molaire monomère(s)/initiateur(s) compris entre 30/1 et 2000/1, en particulier entre 38/1 et 1000/1.

Selon un mode de réalisation particulier, la synthèse par ROP peut être opérée en présence d'un catalyseur. L'homme du métier est à même de choisir un catalyseur adéquat pour la réaction de ROP. A titre d'exemples de catalyseurs, on peut citer des composés phosphorés, par exemple le diphénylphosphate (DPP), des composés de type métalliques, tel que le diéthylhexanoate d'étain (Sn(Oct)₂).

La synthèse par ROP du polycarbonate dihydroxylé peut encore être catalysée par l'acide méthane sulfonique (MSA), ou encore être conduite en l'absence de catalyseur et sous irradiation par micro-ondes, comme décrit dans les demandes déposées sous les numéros FR 2 012 955 et FR 2 012 956.

La réaction de ROP peut être opérée à une température comprise entre 20 et 110 °C, avantageusement à une température inférieure ou égale à 40°C.

Elle peut être conduite en masse (en l'absence de solvant) ou en milieu solvant. Avantageusement, elle est conduite en milieu solvant, en particulier sous agitation. Le milieu solvant peut être plus particulièrement formé d'un ou plusieurs solvant(s) apolaire(s) et aprotique(s), en particulier choisis parmi le toluène, le dichlorométhane, le tétrahydrofurane et leurs mélanges.

A l'issue de la polymérisation, les polycarbonates dihydroxylés peuvent être soumis à une ou plusieurs étapes de purification, en particulier pour éliminer le catalyseur, par exemple par précipitation dans un ou plusieurs solvants polaires, typiquement du méthanol ou de l'éthanol, et récupérés par filtration et séchage.

Selon un mode de réalisation particulier, le polycarbonate dihydroxylé mis en oeuvre selon l'invention, obtenu par ROP à partir d'un initiateur de type diol, HO-Ri-OH, par exemple éthylène glycol, est de formule (II) : 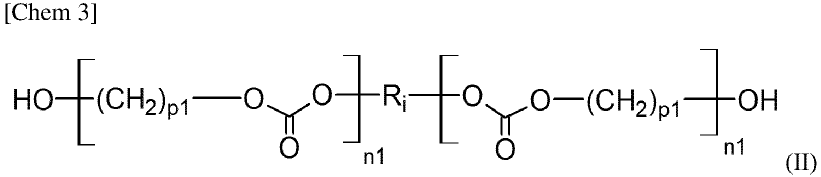 dans laquelle :
Rᵢ représente le groupement issu de l'initiateur diol tel que défini précédemment, par exemple un groupement éthylène issu de l'éthylène glycol ;
p1 est un nombre entier allant de 2 à 4, en particulier p1 vaut 3 ;
n1 est un nombre entier positif, 2×n1 correspondant au nombre moyen d'unités monomériques dérivées des monomères carbonates cycliques, en particulier 2×n1 est compris entre 30 et 2000, en particulier entre 30 et 1000, voire entre 30 et 500.

A titre d'exemple, le polycarbonate dihydroxylé mis en oeuvre selon l'invention est un PTMC obtenu par polymérisation par ROP à partir de monomères TMC, amorcée par un diol, en particulier par l'éthylène glycol, de formule (II') suivante : 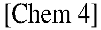 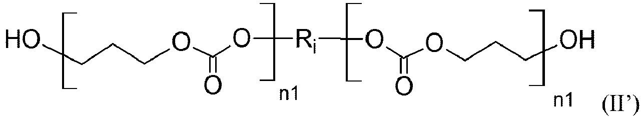 dans laquelle Rᵢ et n1 sont tels que définis précédemment.

De préférence, le polycarbonate dihydroxylé mis en oeuvre selon l'invention est un PTMC dihydroxylé de masse molaire moyenne, notée Mw, inférieure ou égale à 200 000 g.mol⁻¹. Selon un mode de réalisation préféré, le polycarbonate dihydroxylé mis en oeuvre selon l'invention est un PTMC dihydroxylé de masse molaire moyenne comprise entre 2 000 et 100 000 g.mol⁻¹, de préférence comprise entre 4 000 et 10 000 g.mol⁻¹.

Selon un autre mode de réalisation particulier, le polycarbonate dihydroxylé mis en oeuvre selon l'invention peut être un PTMC dihydroxylé de masse molaire moyenne comprise entre 10 000 et 150 000 g.mol⁻¹, voire entre 50 000 et 120 000 g.mol⁻¹.

### Composé triisocyanate

Par « composé triisocyanate » au sens de l'invention, on entend désigner un composé comportant trois fonctions isocyanates réactives.

Par fonction isocyanate « réactive », on entend signifier que la fonction isocyanate est apte à réagir avec une fonction hydroxyle pour former une liaison uréthane.

Le composé triisocyanate est plus particulièrement une molécule organique porteuse de trois fonctions isocyanates réactives, en particulier de formule (III) suivante : 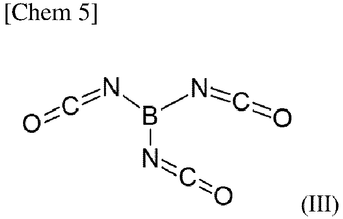 dans laquelle B représente un espaceur organique trivalent, présentant de préférence une masse molaire comprise entre 200 g/mol et 50 000 g/mol.

De préférence, B représente un espaceur organique trivalent présentant une masse molaire comprise entre 200 g/mol et 50 000 g/mol, en particulier entre 250 g/mol et 10 000 g/mol et de préférence entre 290 g/mol et 1 000 g/mol.

En particulier, le composé triisocyanate peut être de formule (III) dans laquelle B représente un radical trivalent hydrocarboné pouvant contenir un ou plusieurs hétéroatomes, tels que des atomes d'oxygène et/ou d'azote.

En particulier, B peut représenter un radical trivalent aliphatique ou alicyclique, de préférence aliphatique, pouvant être interrompu par un ou plusieurs hétéroatomes, en particulier par un ou plusieurs atomes d'azote et/ou d'oxygène, et/ou par un groupe carbonyle (C=O).

Le composé triisocyanate peut être choisi parmi les triisocyanates aliphatiques, cycloaliphatiques et/ou aromatiques.

En particulier, il peut être choisi parmi :
- les triisocyanates obtenus par réaction entre un triol et un excès de diisocyanate, notamment ceux de formule 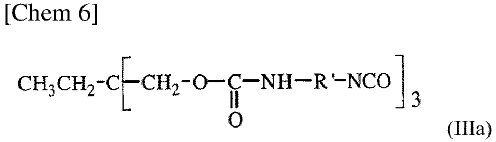
- les triisocyanates à motif biuret, en particulier les isocyanatobiurets de formule : 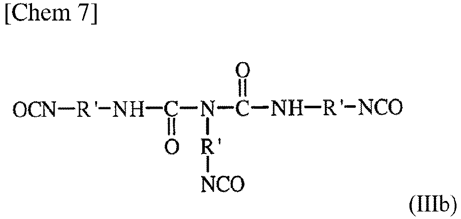
- les isocyanurates de formule : 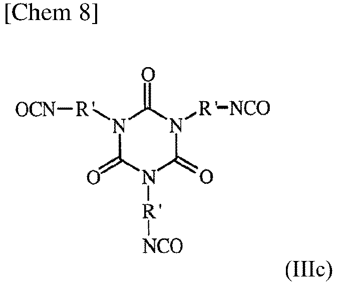
dans lesquelles R' représentent, indépendamment les uns des autres, un radical hydrocarboné linéaire, ramifié ou cyclique, comportant de 2 à 30 atomes de carbone, en particulier un groupe alkylène, linéaire ou ramifié, en particulier linéaire, comportant de 2 à 30 atomes de carbone, en particulier de 4 à 15 atomes de carbone, notamment de 4 à 10 atomes de carbone, et plus particulièrement de 4 à 8 atomes de carbone.

De préférence, ledit composé triisocyanate est choisi parmi les polyisocyanates à motifs biuret, en particulier les isocyanatobiurets de formule (IIIb) décrits précédemment.

Autrement dit, selon un mode de réalisation particulier, le composé triisocyanate peut être de formule (III) précitée dans laquelle B représente un radical trivalent de formule suivante : 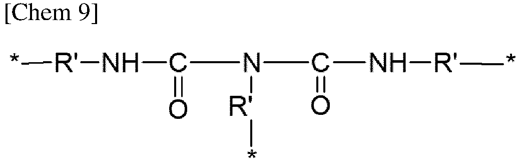 où * représente une liaison covalente à une fonction isocyanate et R' est tel que défini précédemment.

De préférence, R' représentent, indépendamment les uns des autres, un radical hydrocarboné linéaire ou ramifié, comportant de 2 à 30 atomes de carbone, en particulier un alkylène, linéaire ou ramifié, en particulier linéaire, comportant de 2 à 30 atomes de carbone, en particulier de 4 à 15 atomes de carbone, notamment de 4 à 10 atomes de carbone, et plus particulièrement de 4 à 8 atomes de carbone, par exemple en C₆.

Selon un mode de réalisation particulièrement préféré, le composé triisocyanate est le poly(hexaméthylène diisocyanate), noté PHDI, de formule rappelée ci-dessous :

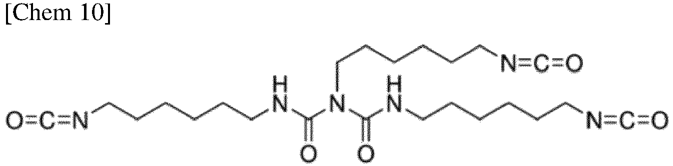

Les composés triisocyanates, tels que le PHDI, peuvent être synthétisés par des méthodes connues de l'homme du métier ou, alternativement, être disponibles dans le commerce.

Selon un mode de réalisation particulièrement préféré, l'électrolyte quasi-solide selon l'invention est formé à partir d'au moins un poly(triméthylène carbonate) dihydroxylé en particulier tel que défini précédemment ; et du poly(hexaméthylène diisocyanate).

De préférence, comme indiqué précédemment, le ou lesdits polycarbonate(s) diydroxylé(s), en particulier PTMC, et le ou lesdits composé(s) triisocyanate(s), en particulier PHDI, sont mis en oeuvre dans la composition en étape (i), dans un rapport massique polycarbonate(s) dihydroxylé(s)/triisocyanate(s) compris entre 0,5 et 5, de préférence entre 1 et 2, et plus préférentiellement d'environ 1,5/1.

Un rapport massique polycarbonate dihydroxylé/triisocyanate de 1,5/1 permet avantageusement d'accéder en étape (ii) à un électrolyte quasi-solide complètement réticulé.

### Composition précurseur de l'électrolyte quasi-solide

### Sel ionique

Comme indiqué précédemment, la composition en étape (i) à partir de laquelle est formé un électrolyte quasi-solide selon l'invention comprend au moins un sel de métal alcalin ou alcalino-terreux, dit encore « sel conducteur ionique », mis en oeuvre pour assurer la conduction des ions au niveau des chaînes de polyalkylène carbonate.

Dans le cadre de l'invention, on entend par :
- « métaux alcalins », les éléments chimiques de la première colonne du tableau périodique des éléments, et plus particulièrement choisis parmi le lithium, le sodium, le potassium, le rubidium, le césium. De préférence, le métal alcalin est le lithium, le sodium ou le potassium, et plus préférentiellement le lithium ;
- « métaux alcalino-terreux », les éléments chimiques de la deuxième colonne du tableau périodique des éléments, et plus particulièrement choisis parmi le béryllium, le magnésium, le calcium, le strontium, le baryum, le radium. De préférence, le métal alcalino-terreux est le magnésium ou le calcium.

Le sel d'un métal alcalin peut être par exemple un sel de lithium ou un sel de sodium ; le sel d'un métal alcalinoterreux peut être par exemple un sel de magnésium. En particulier, le sel mis en oeuvre est un sel de lithium.

A titre d'exemples de sel de lithium, on peut citer le LiPF₆, LiClO₄, LiBF₄, LiAsF₆, LiCF₃SO₃, LiN(C₂F₅SO₂)₂, le bis(trifluorométhylsulfonyl)imide de lithium LiN[SO₂CF₃]₂ (connu sous l'abréviation LiTFSI), le bis(fluorosulfonyl)amidure de lithium (connu sous l'abréviation LiFSI) LiN[SO₂F]₂, le lithium 4,5-dicyano-2-(trifluoromethyl)imidazole (connu sous l'abréviation LiTDI), le lithium bispentafluoroéthylsulfonylimide (connu sous l'abréviation LiBETI), le lithium bis(oxalato)borate (connu sous l'abréviation LiBOB) et le lithium difluoro(oxalato)borate (connu sous l'abréviation LiFOB) et les mélanges de ceux-ci.

De préférence, l'électrolyte comporte, comme sel de lithium, du LiTFSI, LiTDI ou LiFSI, de préférence du LiTFSI ou LiFSI et plus préférentiellement du LiTFSI.

Il appartient à l'homme du métier d'ajuster la quantité en sels de métal alcalin ou alcalino-terreux.

Selon un mode de réalisation particulier, les quantités en polycarbonate(s) dihydroxylé(s) et en sel(s) de lithium sont ajustées de sorte que le ratio molaire entre les groupes carbonyle du polycarbonate dihydroxylé par rapport au lithium, noté [CO]/[Li⁺], soit compris entre 0,5 et 30, en particulier entre 5 et 15 et plus particulièrement d'environ 15.

### Catalyseur de la réaction de réticulation

La composition en étape (i) à partir de laquelle est formée un électrolyte quasi-solide selon l'invention comprend au moins un catalyseur de la réticulation du ou desdits polycarbonate(s) dihydroxylé(s) par le composé triisocyanate, autrement dit un catalyseur de la réaction de couplage entre une fonction hydroxyle et une fonction isocyanate.

A titre d'exemples de tels catalyseurs, peuvent être cités les amines tertiaires tel que le 1,4-diazabicyclo[2,2,2]octane (DABCO), le 1-azabicyclo[2.2.2]octane (quinuclidine), le 1,8-Diazabicyclo[5.4.0]undec-7-ène (DBU, CAS : 6674-22-2), le 1,5-diazabicyclo[4.3.0]non-5-ène (DBN, CAS : 3001-72-7), le 3,3,6,9,9-pentaméthyl-2,10-diazabicyclo[4,4,0]déc-1-ène, le chlorure d'étain, les composés organométalliques tels que les acétonylacétates métalliques, les composés organométalliques de l'étain, l'hexanoate de calcium, le 2-éthylhexanoate de calcium, l'octanoate de calcium et le linoléate de calcium, le dilaurate de dibutylétain (DBTDL, CAS : 75-58-7), le tris(2-éthylhexanoate) de bismuth et le bis(2-éthylhexanoate) de zinc, les sulfonimides, tel que le bis(trifluorométhane)sulfonimide (TFMI, CAS : 82113-65-3), les acides sulfoniques, tel que l'acide trifluorométhanesulfonique (acide triflique), l'acide p-toluène sulfonique (PTSA, CAS : 104-15-4) et l'acide méthanesulfonique (MSA, CAS : 75-75-2), les dérivés phosphatés, tel que le diphénylphosphate (DPP, CAS : 838-85-7).

De préférence, le catalyseur est choisi parmi le 1,4-diazabicyclo[2,2,2]octane (DABCO), le 1,8-diazabicyclo[5.4.0]undec-7-ène (DBU), le 1,5-diazabicyclo[4.3.0]non-5-ène (DBN), le dilaurate de dibutylétain (DBTDL), le bis(trifluorométhane), l'acide triflique, l'acide p-toluène sulfonique (PTSA), l'acide méthanesulfonique (MSA) et le diphénylphosphate (DPP).

Selon un mode de réalisation particulier, le catalyseur est le dilaurate de dibutylétain (DBTDL).

Le ou lesdits catalyseurs peuvent être mis en oeuvre à raison de 0,1 % à 5 % massique, de préférence de 1 % à 3 % massique, par rapport à la masse totale de la composition.

### Charge inorganique conductrice

Selon une variante de réalisation particulière, la composition précurseur de l'électrolyte quasi-solide selon l'invention permet de former une structure solide de type électrolyte solide hybride (HSE). Selon cette variante, la composition de l'étape (i) comporte en outre au moins une charge inorganique.

Les charges inorganiques peuvent être choisies parmi des charges inorganiques conductrices du ou des cations alcalin ou alcalino-terreux, en particulier conductrice d'ions lithium, des charges non conductrices du ou des cations alcalin ou alcalino-terreux, et leurs mélanges. Les charges conductrices d'ions lithium peuvent être par exemple choisies parmi les oxydes lithiés, tels que Li₇La₃Zr₂O₁₂ (LLZO) et Li_{0.33}La_{0.56}TiO₃ (LLTO), Li_{1.3}Al_{0.3}Ti_{1.7}(PO₄)₃ (LATP), etc.

Il peut encore s'agir de charges choisies parmi :
- les grenats, par exemple choisis parmi le Li₇La₃Zr₂O₁₂, le Li₆La₂BaTa₂O₁₂, etc. ;
- les phosphates lithiés, par exemple choisi parmi le Li₃PO₄, le LiPO₃, etc. ;
- les borates lithiés, par exemple choisi parmi le Li₃BO₃, etc. ;
- les oxynitrures, par exemple choisis parmi Li₃PO₄₋ₓN_{2x/3}, Li₄SiO₄₋ₓN_{2x/3}, Li₄GeO₄₋ₓN_{2x/3} avec 0<x<4 ou Li₃BO₃₋ₓN_{2x/3} avec 0<x<3 ;
- les composés lithiés à base d'oxynitrure de lithium et de phosphore (appelés LiPON) ;
- les silicates, par exemple Li₂Si₂O₅
- les sulfurés, par exemple l'argyrodite.

Les charges non conductrices de cations alcalin ou alcalino-terreux peuvent par exemple être choisies parmi l'alumine (Al₂O₃), la silice (SiO₂), le dioxyde de titane (TiO₂) etc.

La ou lesdites charges inorganiques, notamment conductrices d'ions, peuvent être mises en oeuvre dans un rapport volumique charge(s) conductrice(s)/polycarbonate(s) dihydroxylé(s) compris entre 20/80 et 80/20, en particulier entre 20/80 et 60/40.

### Préparation de la composition, précurseur de l'électrolyte quasi-solide

La composition en étape (i) présente avantageusement une bonne homogénéité, en particulier une solubilisation homogène du ou desdits polycarbonates dihydroxylés, en particulier du PTMC, et du ou desdits composés triisocyanates, en particulier du PHDI, dans le ou lesdits plastifiant(s).

Selon un mode de réalisation particulier, la composition en étape (i) est obtenue *via* les étapes suivantes :
(a1) préparation d'une solution, notée « solution S », comprenant le ou lesdits polycarbonates dihydroxylés, le ou lesdits composés triisocyanates et le ou lesdits sels conducteurs ioniques, et éventuellement la ou lesdites charges inorganiques, notamment conductrices, dans le ou lesdits agents plastifiants ; et
(a2) ajout à ladite solution dudit catalyseur de la réaction de couplage entre une fonction hydroxyle et une fonction isocyanate.

De préférence, ladite solution S associe au moins un PTMC dihydroxylé et du PHDI.

Le ou lesdits agent(s) plastifiant(s) peuvent être en particulier choisis parmi le carbonate d'éthylène, le sulfolane et leurs mélanges.

De préférence, ladite solution S comprend moins de 1% massique, en particulier moins de 0,1% massique de solvant(s) annexe(s) distinct(s) du ou desdits plastifiants, tels que des solvants organiques polaires, notamment l'acétonitrile, l'acétone, le tétrahydrofurane et leurs mélanges, voire est dénuée de solvant(s) annexe(s).

La solution S en étape (a1) présente avantageusement une bonne homogénéité. Par exemple, la solution S peut être obtenue par agitation.

En particulier, la solution S est obtenue par ajout du ou desdits composés triisocyanates dans une solution S1 comprenant le ou lesdits polycarbonates dihydroxylés et le ou lesdits agents plastifiants, notamment choisis parmi le carbonate d'éthylène, le sulfolane et leurs mélanges. En particulier, le composé triisocyanate est le PHDI, et le polycarbonate dihydroxylé est un PTMC dihydroxylé. De préférence, la solution S1 comprend en outre le ou lesdits sels conducteurs ioniques.

De préférence, la solution S1 est homogène. En particulier, la solution S1 comprend le polycarbonate dihydroxylé solubilisé dans le ou lesdits plastifiant(s).

En particulier, la solution S1 est préparée par mélange du ou desdits polycarbonates dihydroxylés avec une solution du ou desdits sels conducteurs ioniques dans le ou lesdits plastifiant(s). En particulier, la concentration en sel(s) conducteur(s) ionique(s) dans le ou lesdits plastifiant(s) va de 0,1 mol/L à 4 mol/L, en particulier de 0,5 à 2 mol/L.

La solution S1 et/ou la solution S peuvent de préférence être préparée dans une atmosphère formée à plus de 90% de sa masse, voire constituée, d'un gaz neutre, notamment de l'argon.

De préférence, la composition de l'étape (i) comprend moins de 1% massique, en particulier moins de 0,1% massique de solvant(s) annexe(s) distinct(s) du ou desdits plastifiants, tels que des solvants organiques polaires, notamment l'acétonitrile, l'acétone, le tétrahydrofurane et leurs mélanges, voire est dénuée de solvant(s) annexe(s).

Le ou lesdits composés triisocyanates, en particulier PHDI, peuvent être mis en oeuvre dans ladite composition de l'étape (i) à raison de 10 à 50 % massique, en particulier de 15 à 40 % massique, par rapport à la masse totale de la composition.

Le ou lesdits polycarbonates dihydroxylés, de préférence de PTMC dihydroxylé, peuvent être mis en oeuvre dans ladite composition de l'étape (i) à raison de 10 à 90 % massique, en particulier de 20 à 70 % massique, par rapport à la masse totale de la composition.

Le ou lesdits agent(s) plastifiant(s) peuvent être mis en oeuvre dans la composition de l'étape (i) à raison d'au moins 1 % massique, en particulier de 1 % à 80 % massique, plus particulièrement de 10 % à 70 % massique, notamment de 40 % à 60 % massique, par rapport à la masse totale de la composition.

En particulier, l'ensemble constitué par la somme du ou desdits agent(s) plastifiant(s) et du ou desdits sel(s) conducteur(s) ionique(s) représente au moins 1 % massique, en particulier de 1 % à 85 % massique, plus particulièrement de 10 % à 80 % massique, notamment de 40 % à 70 % massique, par rapport à la masse totale de la composition.

En particulier, le rapport massique de la somme du ou desdits composés triisocyanates et du ou desdits polycarbonates dihydroxylés sur la somme du ou desdits agent(s) plastifiant(s) et du ou desdits sel(s) conducteur(s) ionique(s), noté triisocyanate(s) + polycarbonate(s) dihydroxylé(s) / plastifiant(s) + sel(s), peut être compris entre 10 % et 80 %, en particulier entre 40 % et 70 %, voire entre 50 % et 70 %.

Alternativement, l'ensemble constitué par la somme du ou desdits agent(s) plastifiant(s) et du ou desdits sel(s) conducteur(s) ionique(s) peut représenter au moins 1 % massique, en particulier de 1 % à 85 % massique, plus particulièrement de 10 % à 80 % massique, notamment de 40 % à 70 % massique, par rapport à la masse totale des autres constituants de la composition.

Selon un mode de réalisation particulier, la composition de l'étape (i) peut être constituée du ou desdits agent(s) plastifiant(s), du ou desdits polycarbonate(s) dihydroxylé(s), du ou desdits composé(s) triisocyanate(s), du ou desdits sel(s) conducteur(s) ionique(s), du ou desdits catalyseur(s) et éventuellement d'au moins une charge inorganique, notamment telle que décrite précédemment.

### Formation de l'électrolyte quasi-solide

Comme indiqué précédemment, la formation d'un électrolyte quasi-solide selon l'invention fait intervenir la réticulation de ladite composition de l'étape (i), de préférence préalablement mise sous la forme d'une couche ou film en surface d'un substrat.

Avantageusement, la réticulation en étape (ii) est opérée dans des conditions permettant de limiter voire d'empêcher l'évaporation du ou desdits agent(s) plastifiant(s).

En particulier, l'étape (ii) peut être opérée par chauffage de ladite composition à une température comprise entre 50 et 100 °C, en particulier entre 50 et 70 °C.

La réticulation peut être opérée dans un four, notamment sous air ambiant.

De préférence, le chauffage est poursuivi jusqu'à obtenir une réticulation optimale desdites chaînes de polyalkylène carbonate, de préférence une réticulation complète.

Par « réticulation complète », on entend signifier que l'ensemble des fonctions hydroxyles des polyalkylènes carbonates dihydroxylés présents dans la composition ont réagi avec les fonctions isocyanates des composés triisocyanates.

D'une manière générale, la durée de réticulation peut être comprise entre 3 heures et 48 heures, en particulier entre 6 heures et 24 heures et plus particulièrement entre 10 heures et 14 heures.

Comme indiqué précédemment, l'électrolyte quasi-solide peut être préparé sous la forme d'un film ou d'une membrane d'électrolyte directement en surface d'un substrat adapté, en particulier inerte et plat.

Dans le cadre de cette variante de réalisation, la composition de l'étape (i) est, préalablement à l'étape (ii) de réticulation, mise en oeuvre sous la forme d'une couche en surface d'un substrat.

La couche peut être par exemple obtenue par enduction, par exemple à l'aide d'une racle. Le substrat peut être de diverses natures. Il peut être en verre, en alumine, en aluminium, en silicone, en polyimide, en polytétrafluoroéthylène (PTFE), en polytéréphtalate d'éthylène (PET), en silicone ou encore en polypropylène.

Selon une variante de réalisation, le substrat peut être une des électrodes du système électrochimique auquel est destiné l'électrolyte quasi-solide selon l'invention. Par exemple, pour la préparation d'un électrolyte quasi-solide destiné à une batterie au lithium, le substrat peut être une électrode lithiée.

Le film d'électrolyte quasi-solide peut être éventuellement désolidarisé du substrat pour être mis en oeuvre au niveau du système électrochimique auquel il est destiné, en particulier transféré sur au moins une électrode.

Le film d'électrolyte quasi-solide peut présenter par exemple une épaisseur comprise entre 5 et 600 µm, en particulier entre 50 et 500 µm et plus particulièrement entre 100 et 400 µm.

### Système électrochimique

L'électrolyte quasi-solide obtenu selon l'invention peut être avantageusement mis en oeuvre comme électrolyte dans un système électrochimique. L'électrolyte quasi-solide peut en particulier être mis en oeuvre dans un système électrochimique dans les mêmes conditions qu'un électrolyte solide, c'est-à-dire un électrolyte excluant la présence d'un composant sous forme liquide. Avantageusement, l'électrolyte quasi-solide selon l'invention peut faire office à la fois de séparateur et de conducteur ionique dans un élément électrochimique. En particulier, le ou lesdits agent(s) plastifiant(s) sont piégé(s) dans une structure de type électrolyte polymérique solide (SPE) ou électrolyte solide hybride (HSE).

Le système électrochimique peut être un système générateur, convertisseur ou de stockage électrochimique. Il peut s'agir plus particulièrement d'une pile à combustible, par exemple une batterie primaire ou secondaire, par exemple une batterie au lithium, sodium, magnésium, potassium ou calcium ; d'une batterie à flux (« redox flow battery » en terminologie anglo-saxonne) ; d'un accumulateur lithium-air, lithium-soufre.

Selon un mode de réalisation particulier, l'électrolyte quasi-solide est mis en oeuvre dans une batterie rechargeable, en particulier dans une batterie au lithium, notamment une batterie lithium-ion ou lithium-métal.

En particulier, l'invention concerne encore, selon un autre de ses aspects, un ensemble électrode/membrane électrolytique, comprenant une membrane d'électrolyte quasi-solide selon l'invention.

Elle concerne également un élément électrochimique, dit encore générateur électrochimique ou accumulateur, comportant un électrolyte quasi-solide selon l'invention.

Un élément électrochimique selon l'invention comporte, d'une manière générale, un film d'électrolyte quasi-solide pris en sandwich entre au moins une électrode positive et une électrode négative. Le film d'électrolyte quasi-solide agit à la fois comme conducteur ionique et séparateur entre les électrodes positive et négative.

L'électrode positive d'un élément électrochimique au lithium ou lithium-ion comprend généralement, en tant que matière électrochimiquement active, des composés lamellaires, tels que LiCoO₂, LiNiO₂ et mixtes Li(Ni, Co, Mn, Al)O₂, ou des composés de structure spinelle de compositions proches de LiMn₂O₄, des phosphates du lithium, en particulier LiMnFePO₄ ou LiFePO₄.

De manière avantageuse, l'électrode positive comprend, en tant que matière électrochimiquement active, du LiNi_{1/3}Mn_{1/3}Co_{1/3}O₂ (cathodes NCM) ou du LiCoO₂, de préférence du LiNi_{1/3}Mn_{1/3}Co_{1/3}O₂.

L'électrode négative comprend généralement, en tant que matière électrochimiquement active, du lithium métal ou alliage à base de lithium dans le cas des accumulateurs primaires, ou des matériaux d'intercalation tels que le carbone graphite, ou de l'oxyde de titane lithié (Li₄Ti₅O₁₂) ou de l'oxyde de titane et de niobium (TiNb₂O₇), dans le cas des accumulateurs basés sur la technologie lithium-ion.

Un élément électrochimique selon l'invention peut être plus particulièrement destiné à une batterie, notamment une batterie au lithium. Typiquement, une batterie comprend une pluralité d'éléments électrochimiques susceptibles d'être regroupés au sein d'une même enceinte. Une batterie peut être divisée en modules, chaque module étant composé d'une pluralité d'éléments électrochimiques reliés entre eux en série, en parallèle, en parallèle-série ou en série-parallèle, réunis au sein d'un même conteneur formant l'enveloppe du module. La batterie est destinée à fournir de l'énergie électrique à une application extérieure. Un circuit de charge est généralement prévu auquel la batterie peut être branchée pour recharger les éléments. Un système de gestion comprenant des capteurs de mesures et un circuit électronique de contrôle, plus ou moins évolué selon les applications, peut être associé à la batterie.

L'invention concerne encore un module de batterie, en particulier pour une batterie rechargeable, notamment une batterie au lithium, comprenant une pluralité d'éléments électrochimiques.

Les éléments électrochimiques au sein d'un module sont typiquement connectés électriquement, en série et/ou en parallèle. Chaque élément peut être équipé de dispositifs nécessaires à la connexion électrique avec les autres éléments du module, par exemple sous la forme de barrettes métalliques (busbar), de dispositifs de mesure des paramètres de fonctionnement de l'élément (température, tension, courant) et éventuellement de dispositifs de sécurité (soupape, opercule).

L'invention concerne encore une batterie, en particulier une batterie au lithium, contenant un assemblage de modules selon l'invention, chaque module comportant plusieurs éléments électrochimiques selon l'invention.

De manière avantageuse, il peut s'agir d'une batterie lithium-métal, comprenant une électrode en lithium métallique Li⁰ et une électrode comprenant du LiNi_{1/3}Mn_{1/3}Co_{1/3}O₂ ou du LiCoO₂, de préférence du LiNi_{1/3}Mn_{1/3}Co_{1/3}O₂.

L'invention va maintenant être décrite au moyen des exemples et figures suivants, donnés bien entendu à titre illustratif et non limitatif de l'invention.

### Exemple 1

### Préparation des électrolytes

### 1.1. Préparation des électrolytes quasi-solides et solides

### 1.1.1. Préparation d'électrolytes quasi-solides réticulé avec plastifiant (selon l'invention)

Un PTMC comportant deux fonctions hydroxyles réactives (noté "PTMC bi"), de masse molaire de 4018 g.mol⁻¹ (environ 4 kg.mol⁻¹), est préalablement synthétisé par ROP à partir de triméthylène carbonate, initiée par l'éthylène glycol et catalysée par l'acide méthane sulfonique.

En boîte à gants, sous une atmosphère composée d'argon, une solution de sel de lithium (LiTFSI) à 1 mol/L est préparée dans du carbonate d'éthylène.

A cette solution, conservée en boîte à gants, 1,5 g dudit PTMC bi est solubilisé dans 4,16 g de la solution de LiTFSI dans du carbonate d'éthylène préalablement préparée, pour obtenir une solution, nommée « solution 1 », dont le rapport entre les groupes carbonyle du polycarbonate par rapport au lithium, noté [CO]/[Li⁺], est de 15. Cette solution est agitée jusqu'à obtenir une solution homogène.

Ensuite, 1 g de poly(hexaméthylène diisocyanate), noté PHDI, de Sigma Aldrich, est introduit dans la solution 1. La solution est mise sous agitation pour obtenir une solution homogène. Cette solution est nommée « solution S » par la suite.

Un rapport massique des fonctions OH/NCO de 1,5/1 est respecté afin que toutes les fonctions réagissent et que le système soit complètement réticulé.

Ensuite, du dilaurate de dibutylétain (DBTDL) (Sigma Aldrich) est ajouté à raison de 2 % massique comme catalyseur.

De façon à mettre en forme le film d'électrolyte quasi-solide, la solution est ensuite étalée à l'aide d'une racle de hauteur 300 µm sur une table d'enduction sur un revêtement inerte et plat en aluminium à une vitesse permettant de limiter la formation de bulles d'air. L'ensemble est mis dans un four à 60°C. La réticulation à lieu pendant 12 heures.

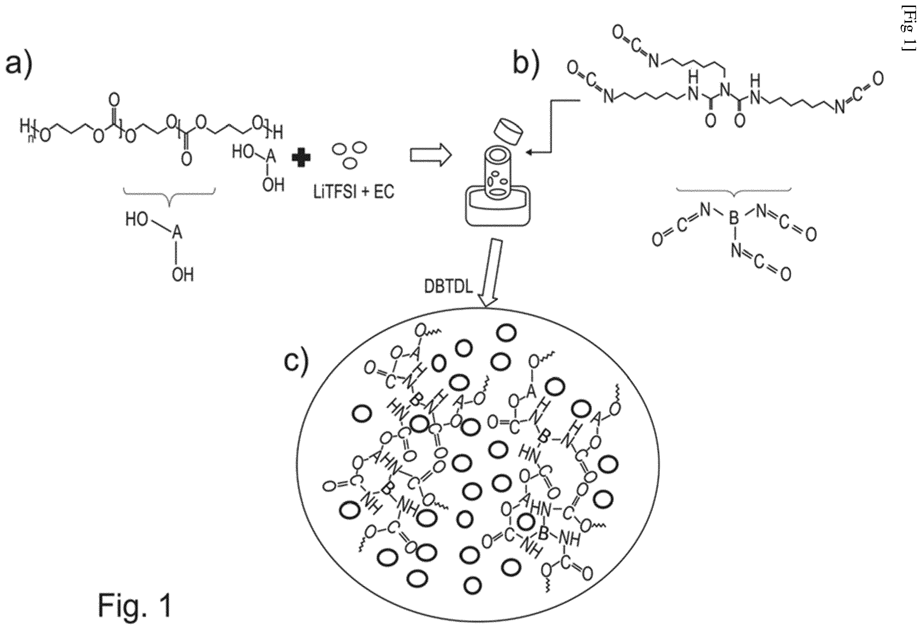

Le procédé mis en oeuvre est illustré en figure 1.

Le même protocole est reproduit pour préparer un électrolyte quasi-solide :
- en remplaçant le carbonate d'éthylène par du sulfolane ;
- en remplaçant ledit PTMC bi de masse molaire de 4018 g.mol⁻¹ par un PTMC dihydroxylé de masse molaire de 100 kg.mol⁻¹, commercialisé par ABCR.

Les films obtenus sont autoportants.

### 1.1.2. Préparation d'électrolytes solides réticulés sans plastifiant (hors invention)

En boîte à gants, sous une atmosphère composée d'argon, 1 g de poly(hexaméthylène diisocyanate), noté PHDI, de Sigma Aldrich, est solubilisé dans 2 mL d'acétonitrile.

La solution est mise sous agitation pour obtenir une première solution homogène.

1,5 g du PTMC bi décrit en exemple 1.1.1. et du sel de lithium (LiTFSI) avec un rapport entre les groupes carbonyle du polycarbonate par rapport au lithium, noté [CO]/[Li⁺], de 15, sont solubilisés avec 2 mL d'acétonitrile.

Cette solution est chauffée à 80°C sous agitation pour obtenir une deuxième solution homogène.

Un rapport massique des fonctions OH/NCO de 1,5/1 doit être respecté afin que toutes les fonctions réagissent et que le système soit complètement réticulé.

Une fois les solutions homogénéisées, la première solution est transvasée dans la deuxième solution sous agitation et le mélange chauffé à 80°C de façon à évaporer en partie le solvant et ainsi concentrer la solution.

La solution est laissée refroidir à température ambiante, puis du dilaurate de dibutylétain (DBTDL) (Sigma Aldrich) est ajouté à raison de 2 % massique comme catalyseur.

La solution est ensuite dégazée sous vide pendant 5 minutes à froid.

De façon à mettre en forme le film d'électrolyte solide, la solution est ensuite étalée à l'aide d'une racle de hauteur 300 µm sur une table d'enduction sur un revêtement inerte et plat en aluminium.

L'ensemble est mis dans une étuve à 80°C. La réticulation a lieu pendant 12 heures.

Le même protocole est reproduit pour préparer un électrolyte solide réticulé, sans plastifiant, à partir d'un PTMC dihydroxylé de masse molaire de 100 kg.mol⁻¹, commercialisé par ABCR.

### 1.1.2. Préparation d'électrolytes solides non réticulés (hors invention)

A titre de comparaison, un électrolyte polymérique non réticulé est préparé à partir d'un PTMC mono-hydroxylé de masse molaire de 10 kg.mol⁻¹, synthétisé par ROP à partir de triméthylène carbonate, initiée par un mono-alcool (3-phénylpropanol) et catalysée par l'acide méthane sulfonique. Cet électrolyte polymérique non réticulé ne comporte pas de plastifiant.

### 1.2. Caractérisation de l'électrolyte quasi-solide réticulé avec plastifiant

L'électrolyte quasi-solide réticulé préparé comme décrit en exemple 1.1.1., à partir du PTMC dihydroxylé de masse molaire moyenne de 100 kg.mol⁻¹ en présence de carbonate d'éthylène, est caractérisé par spectrométrie infrarouge à transformée de Fourier ou FT-IR (pour l'acronyme anglais « Fourier Transform InfraRed Spectroscopy »), muni d'une réflectance totale atténuée ATR (pour l'acronyme anglais « Attenuated Total Réflectance »).

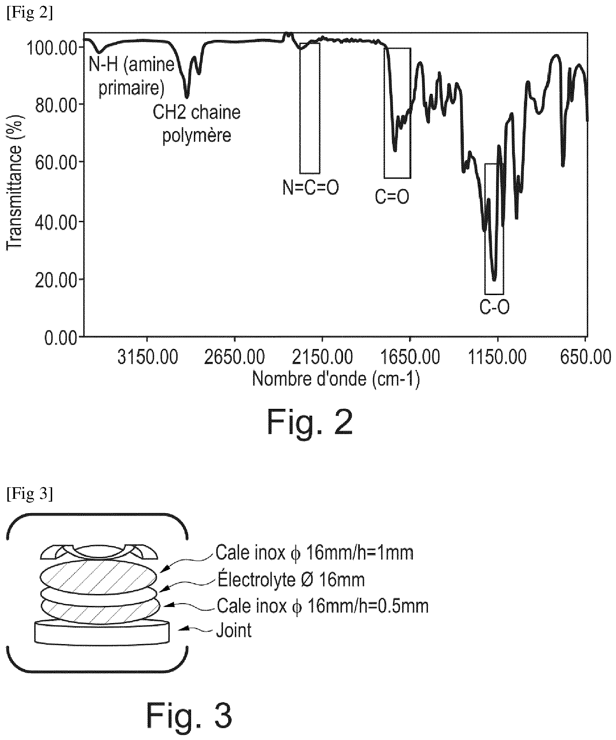

Le spectre IR (figure 2) permet de mettre en évidence la disparition totale de la bande N=C=O (2250 cm⁻¹) du poly(hexaméthylène diisocyanate) de départ, ce qui prouve que toutes les fonctions isocyanates ont réagi.

La présence des pics C=O (1700 cm⁻¹) et C-O (1200 cm⁻¹) provient du PTMC et du carbonate d'éthylène.

### Exemple 2

### Propriétés électrochimiques des électrolytes quasi-solides et solides

Evaluation de la conductivité ionique

Les électrolytes quasi-solides et solides préparés en exemple 1 sont montés en pile bouton, de 16 mm de diamètre, entre deux électrodes en inox.

Le schéma du montage de la pile bouton est représenté en figure 3.

Les résultats de conductivité ionique sont représentés en figure 4.

Les électrolytes plastifiés réticulés à partir du PTMC dihydroxylé de masse molaire faible de l'ordre de 4 kg/mol présentent des conductivités supérieures à celle de l'électrolyte non plastifié réticulé à partir du même PTMC. Dans le cas de l'électrolyte réticulé à partir du PTMC dihydroxylé de masse molaire de l'ordre de 4 kg/mol, et plastifiés avec du sulfolane, la conductivité est de l'ordre de 10⁻⁵ S/cm à 80°C, proche de celle du PTMC non réticulé, et la conductivité est même supérieure à la conductivité du PTMC non réticulé à des températures inférieures à 50°C. La présence de plastifiant dans l'électrolyte réticulé permet donc à la fois d'améliorer la conductivité du PTMC et de s'affranchir d'entretoise ou séparateur contrairement au système non plastifié ou non réticulé.

Dans le cas de la réticulation à partir d'un PTMC de masse molaire beaucoup plus élevée, de 100 kg.mol⁻¹, soit 25 fois supérieure à la masse molaire du premier PTMC, la conductivité est de l'ordre de 10⁻⁹ S/cm à 80°C. Avec l'ajout de carbonate d'éthylène comme plastifiant, une nette augmentation de la conductivité est observée, avec une valeur d'environ 10⁻⁶ S/cm à 80°C.

## Revendications

1. Procédé de préparation d'un électrolyte dit quasi-solide comprenant au moins les étapes suivantes :
(i) disposer d'une composition comprenant :
a) au moins un agent plastifiant choisi parmi les carbonates linéaires ou cycliques ; les sulfones linéaires ou cycliques ; les carbonates fluorés ; les dinitriles ; les lactones ; les polyéthers linéaires ou cycliques liquides ; les polyéthers fluorés ; et leurs mélanges ;
b) au moins un polyalkylène carbonate présentant deux fonctions hydroxyle terminales libres (-OH), dit polycarbonate dihydroxylé, et présentant une masse molaire moyenne Mw, inférieure ou égale à 200 000 g.mol⁻¹ ;
c) au moins un composé triisocyanate ; le ou lesdits polycarbonate(s) dihydroxylé(s) et le ou lesdits composés triisocyanate(s) étant mis en oeuvre dans un rapport massique polycarbonate(s) dihydroxylé(s)/triisocyanate(s) compris entre 0,5 et 5 ;
d) au moins un sel de métal alcalin ou alcalino-terreux, dit sel conducteur ionique, en particulier un sel de lithium ;
e) au moins un catalyseur de la réaction de couplage entre une fonction hydroxyle et une fonction isocyanate ; et
f) éventuellement au moins une charge inorganique, en particulier conductrice du ou des cations alcalin ou alcalino-terreux, plus particulièrement une charge inorganique conductrice des ions lithium ;
(ii) procéder à la réticulation de ladite composition, pour former ledit électrolyte quasi-solide.

2. Procédé selon la revendication précédente, dans lequel le ou lesdits agent(s) plastifiant(s) sont mis en oeuvre dans la composition de l'étape (i) à raison d'au moins 1 % massique, en particulier de 1 % à 80 % massique, plus particulièrement de 10 % à 70 % massique, notamment de 40 % à 60 % massique, par rapport à la masse totale de la composition.

3. Procédé selon la revendication 1 ou 2, dans lequel le ou lesdits agent(s) plastifiant(s) sont choisis parmi le carbonate d'éthylène, le carbonate de propylène, le carbonate de diéthyle et le sulfolane, de préférence parmi le carbonate d'éthylène et le sulfolane.

4. Procédé selon l'une quelconque des revendications précédentes, dans lequel ledit polycarbonate dihydroxylé présente une masse molaire moyenne, Mw, comprise entre 2 000 et 100 000 g.mol⁻¹, de préférence inférieure ou égale à 10 000 g.mol⁻¹ et plus préférentiellement comprise entre 4 000 et 10 000 g.mol⁻¹.

5. Procédé selon l'une quelconque des revendications précédentes, dans lequel ledit polycarbonate dihydroxylé est préalablement obtenu par polymérisation par ouverture de cycle (ROP) d'un ou plusieurs monomères carbonates cycliques de cinq à huit chaînons, en particulier de formule (I) 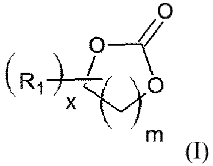 dans laquelle m est un entier compris entre 1 et 4, notamment entre 1 et 3, en particulier m vaut 1 ou 2 et plus particulièrement m vaut 2 ; x est un entier compris entre 0 et 2m+2 ; et R₁, porté(s) par un ou plusieurs atomes de carbone du cycle, représentent, indépendamment les uns des autres, des substituants, en particulier des groupements alkyles, en particulier en C₁ à C₅, linéaires ou ramifiés ; de préférence ledit polycarbonate dihydroxylé est préalablement obtenu par ROP du triméthylène carbonate.

6. Procédé selon la revendication précédente, dans lequel ladite polymérisation est initiée par au moins une molécule organique portant deux fonctions hydroxyles, en particulier par un composé de formule Rᵢ(-OH)₂, dans laquelle Rᵢ représente un groupe non réactif divalent, en particulier un groupe alkylène, notamment en C₁ à C₆, en particulier en C₁ à C₃, linéaire ou ramifié ; de préférence par l'éthylène glycol.

7. Procédé selon l'une quelconque des revendications précédentes, dans lequel ledit polycarbonate dihydroxylé est de formule (II) 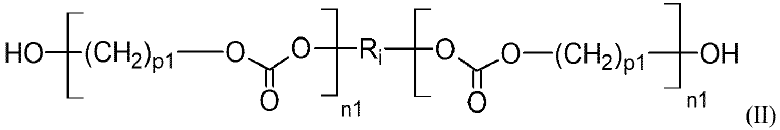 dans laquelle :
Rᵢ est tel que défini en revendication 6, en particulier un groupement éthylène ;
p1 est un nombre entier allant de 2 à 4, en particulier p1 vaut 3 ; et
n1 est un nombre entier positif, 2×n1 correspondant au nombre moyen d'unités monomériques dérivées des monomères carbonates cycliques, en particulier 2×n1 étant compris entre 30 et 2000, plus particulièrement entre 30 et 1000, voire entre 30 et 500.

8. Procédé selon l'une quelconque des revendications précédentes, dans lequel ledit composé triisocyanate est de formule (III) suivante : 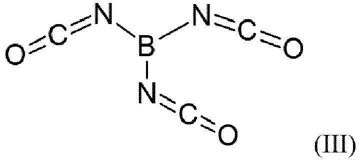 dans laquelle B représente un espaceur organique trivalent, présentant de préférence une masse molaire comprise entre 200 g/mol et 50 000 g/mol, notamment entre 250 g/mol et 10 000 g/mol et de préférence entre 290 g/mol et 1 000 g/mol ; de préférence B est un radical trivalent hydrocarboné pouvant contenir un ou plusieurs hétéroatomes, tels que des atomes d'oxygène et/ou d'azote,
et plus préférentiellement B représente un radical trivalent de formule : 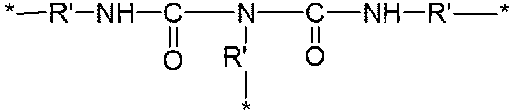
où * représente une liaison covalente à une fonction isocyanate et R' représentent, indépendamment les uns des autres, un radical hydrocarboné, linéaire ou ramifié, comportant de 2 à 30 atomes de carbone, en particulier un groupe alkylène, linéaire ou ramifié, en particulier linéaire, comportant de 2 à 30 atomes de carbone, en particulier de 4 à 15 atomes de carbone, notamment de 4 à 10 atomes de carbone, et plus particulièrement de 4 à 8 atomes de carbone,
en particulier ledit composé triisocyanate est le poly(hexaméthylène diisocyanate) (PHDI).

9. Procédé selon l'une quelconque des revendications précédentes, dans lequel le ou lesdits polycarbonate(s) dihydroxylé(s) et le ou lesdits composé(s) triisocyanate(s) sont mis en oeuvre dans un rapport massique polycarbonate(s) dihydroxylé(s)/triisocyanate(s) compris entre 1 et 2, et plus préférentiellement de 1,5/1.

10. Procédé selon l'une quelconque des revendications précédentes, dans lequel ledit sel conducteur ionique est un sel de lithium, en particulier choisi parmi du bis(trifluorométhylsulfonyl)imide de lithium (LiTFSI), lithium 4,5-dicyano-2-(trifluoromethyl)imidazole (LiTDI) ou bis(fluorosulfonyl)amidure de lithium (LiFSI), de préférence du LiTFSI ou LiFSI ; les quantités en polycarbonate(s) dihydroxylé(s) et en sel(s) de lithium étant de préférence ajustées de manière à ce que le ratio molaire entre les groupes carbonyle du polycarbonate par rapport au lithium, noté [CO]/[Li⁺], soit compris entre 0,5 et 30, en particulier entre 5 et 15 et plus particulièrement de 15.

11. Procédé selon l'une quelconque des revendications précédentes, dans lequel ledit catalyseur de la réaction de couplage entre une fonction hydroxyle et une fonction isocyanate est choisi parmi 1,4-diazabicyclo[2,2,2]octane (DABCO), le 1,8-diazabicyclo[5.4.0]undec-7-ène (DBU), le 1,5-diazabicyclo[4.3.0]non-5-ène (DBN), le dilaurate de dibutylétain (DBTDL), le bis(trifluorométhane), l'acide triflique, l'acide p-toluène sulfonique (PTSA), l'acide méthanesulfonique (MSA) et le diphénylphosphate (DPP), en particulier ledit catalyseur est le dilaurate de dibutylétain (DBTDL).

12. Procédé selon l'une quelconque des revendications précédentes, dans lequel ladite composition en étape (i) est obtenue *via* les étapes suivantes :
(a1) préparation d'une solution, notée « solution S », comprenant le ou lesdits polycarbonates dihydroxylés, le ou lesdits composés triisocyanates et le ou lesdits sels conducteurs ioniques, et éventuellement la ou lesdites charges inorganiques, notamment conductrices, dans le ou lesdits agent(s) plastifiant(s), en particulier choisi(s) parmi le carbonate d'éthylène, le sulfolane et leurs mélanges ; et
(a2) ajout à ladite solution dudit catalyseur de la réaction de couplage entre une fonction hydroxyle et une fonction isocyanate,
ladite solution S étant en particulier obtenue par ajout du ou desdits composés triisocyanates, de préférence le poly(hexaméthylène diisocyanate), dans une solution S1 comprenant le ou lesdits polycarbonates dihydroxylés, de préférence un poly(triméthylène carbonate) (PTMC), et le ou lesdits agent(s) plastifiant(s), notamment choisi(s) parmi le carbonate d'éthylène, le sulfolane et leurs mélanges,
la solution S1 comprenant de préférence le ou lesdits sels conducteurs ioniques.

13. Procédé selon l'une quelconque des revendications précédentes, dans lequel ladite composition est, préalablement à l'étape (ii), mise en oeuvre sous la forme d'une couche en surface d'un substrat, en particulier par enduction.

14. Procédé selon l'une quelconque des revendications précédentes, dans lequel l'étape (ii) est opérée par chauffage de la composition à une température comprise entre 50 et 100 °C, en particulier entre 50 et 70 °C.

15. Electrolyte quasi-solide obtenu par un procédé tel que défini selon l'une quelconque des revendications 1 à 14, ledit électrolyte quasi-solide se présentant en particulier sous la forme d'un film.

16. Electrolyte quasi-solide selon la revendication précédente, le ou lesdits agent(s) plastifiant(s) étant piégé(s) dans une structure de type électrolyte polymérique solide (SPE) ou électrolyte solide hybride (HSE),

17. Elément électrochimique comprenant un électrolyte quasi-solide tel que défini en revendication 15 ou 16, ledit élément électrochimique comportant en particulier un film dudit électrolyte quasi-solide pris en sandwich entre au moins une électrode positive et une électrode négative.

18. Module de batterie comprenant une pluralité d'éléments électrochimiques tels que définis en revendication 17.

19. Batterie comprenant un assemblage de modules tels que définis en revendication 18, ladite batterie étant en particulier une batterie rechargeable, notamment une batterie au lithium, par exemple une batterie lithium-ion ou lithium-métal.
